# EUROPÄISCHE PATENTANMELDUNG

(11) **EP 0 721 078 A2**
(43) Veröffentlichungstag der Anmeldung: **10.07.1996**
(21) Anmeldenummer: 95120100.3
(22) Anmeldetag: 19.12.1995
(51) Int. Cl.: F16J 15/32

(54) **Dichtung zwischen zwei axial zueinander beweglichen Bauteilen**

(30) Priorität: 05.01.1995 DE 19500172
(71) Anmelder: Hecker Werke GmbH & Co. KG, Spezialfabriken für Dicht- und Reibelemente, D-71093 Weil im Schönbuch (DE)
(72) Erfinder: Keck, Matthias, Dipl.-Ing., D-71272 Renningen (DE)
(74) Vertreter: Riedel, Peter

(57) **Zusammenfassung**

Zwischen zwei axial zueinander beweglichen Bauteilen (2, 3) ist eine Dichtung eingesetzt, die als ringförmiges, zwei axial benachbarte Druckräume (25, 26) trennendes Dichtelement (1) ausgebildet ist. Das Dichtelement ist in eine Nut (4) in einem der Bauteile (2) einsetzbar und weist eine umfangsseitige, mit Vorspannung radial kraftbeaufschlagte Dichtzone (9) am Dichtkörper (8) des Dichtelements (1) auf, die an der Mantelfläche (13) des anderen Bauteils (3) abdichtend anliegt. Zwischen dem Nutgrund (5) und dem Dichtelement (1) ist ein Freiraum (15) gebildet, der mit einem in den Druckräumen (25, 26) anstehenden Überdruck beaufschlagbar ist. Weiterhin sind zwei stirnseitige Dichtkanten (10, 11) vorgesehen, die an den axial gegenüberliegenden Nutflanken (6, 7) anliegen.

Um die Dichtung so auszubilden, daß bei allen anliegenden Druckdifferenzen eine gute Abdichtung gewährleistet ist und andererseits eine zu hohe Losbrechkraft nach längeren Betriebspausen vermieden ist, ist vorgesehen, daß die stirnseitigen Dichtkanten (10, 11) mit radialem Abstand (a) zueinander angeordnet sind.

## Beschreibung

Die Erfindung betrifft eine Dichtung zwischen zwei axial zueinander beweglichen Bauteilen, insbesondere zwischen einer Kolbenstange bzw. einem Kolben und einem aufnehmenden Zylinder, nach dem Oberbegriff des Anspruches 1.

Derartige Dichtungen werden bevorzugt in der Pneumatik als reibungsarme Stangen- und Zylinder-Dichtelemente eingesetzt. Die ringförmigen Dichtelemente trennen zwei axial benachbarte Druckräume, die als Ringräume zwischen den benachbarten Mantelflächen von Stange und Zylinder ausgebildet sind. Das Dichtelement, das in eine Nut entweder in der Kolbenstange oder im Zylinder einsetzbar ist, weist eine umfangsseitige Dichtzone auf, die am Dichtkörper des Dichtelements ausgebildet ist. Das Dichtelement ist mit Vorspannung radial kraftbeaufschlagt, so daß die umfangsseitige Dichtzone an der Mantelfläche des benachbarten Bauteils abdichtend anliegt. Zwischen dem Nutgrund und dem Dichtelement ist ein Freiraum gebildet, der mit dem in den Druckräumen anstehenden Überdruck beaufschlagbar ist. Vom Dichtkörper aus erstrecken sich in Richtung Nutgrund zwei winklig ausgerichtete Dichtlippen, die mit je einer stirnseitigen Dichtkante an den axial gegenüberliegenden Nutflanken zur Anlage kommen und den Freiraum gegen die benachbarten Druckräume abgrenzen. Die beiden schmalen Dichtlippen müssen zwangsentformt werden, um überstehende Gummiränder zu entfernen. Bei der Herstellung in Preß- oder Spritzformen stellt der Raum zwischen den beiden Dichtlippen eine Hinterschneidung dar, so daß eine Entformung nur mit aufwendig gestalteten Werkzeugen verbunden mit hohem Zeitaufwand möglich ist.

Ein in einem Druckraum anstehender Überdruck bewirkt ein Anwinkeln bzw. Anheben der diesem Druckraum benachbarten Dichtlippe, wodurch der Überdruck auch in dem Freiraum wirksam wird. Der Überdruck im Freiraum drückt das Dichtelement radial an das anliegende Bauteil, so daß die umfangsseitige Dichtzone des Dichtelements mit höherem Druck an der Kolbenstange bzw. dem Zylinder anliegt. Der Druckausgleich zwischen dem mit Überdruck beaufschlagten Druckraum und dem Freiraum bewirkt, daß sich die Dichtlippe in ihre Dichtposition stellt. Bei einem Nachlassen des Überdrucks im Druckraum kann der Überdruck im Freiraum anhalten, was auch im Stillstand eine gute Abdichtung gewährleistet. Gerade bei aufeinanderfolgenden kurzen Betriebsintervallen kann dies vorteilhaft sein. Bei länger andauernden Betriebspausen kann aufgrund der durch Adhäsionseffekte erhöhten Reibkraft zwischen der umfangsseitigen Dichtkante und der angrenzenden Mantelfläche eine hohe Losbrechkraft auftreten, was unerwünscht ist.

Der Erfindung liegt die Aufgabe zugrunde, eine gattungsgemäße Dichtung derart weiterzubilden, daß einerseits bei allen anliegenden Druckdifferenzen eine gute Abdichtung der axial benachbarten Druckräume gewährleistet und andererseits eine zu hohe Losbrechkraft nach längeren Betriebspausen vermieden ist.

Diese Aufgabe wird bei einer gattungsgemäßen Dichtung mit den Merkmalen des Anspruches 1 gelöst.

Aufgrund der radial verschobenen Berührlinien zwischen den stirnseitigen Dichtkanten und den jeweils angrenzenden Nutflanken ergibt sich eine parallel zur Längsachse der Bauteile wirkende Kraft auf das Dichtelement, die zu einem das Dichtelement verformenden und kippenden Moment führt, wobei die Kippachse entlang derjenigen Dichtkante verläuft, die auf der dem Überdruckraum abgewandten Seite liegt. Eine Druckdifferenz zwischen den beiden Druckräumen führt daher in jedem Fall zu einem Kippen und elastischen Verformen des Dichtelementes, so daß ein Druckausgleich zwischen dem mit Überdruck beaufschlagten Überdruckraum und dem Freiraum stattfindet. Liegt der Überdruck in demjenigen Druckraum an, der an die dem Nutgrund benachbarte Dichtkante angrenzt, kippt das Dichtelement nach erfolgtem Druckausgleich infolge seiner Eigenelastizität in seine Ursprungslage zurück. In der Ursprungslage liegen beide stirnseitige Dichtkanten druckdicht an den jeweils benachbarten Nutflanken an, so daß der Freiraum von dem Überdruckraum und dem anderen Druckraum getrennt ist. Ein Nachlassen des Druckes im Überdruckraum hat eine Zunahme der Druckdifferenz zwischen dem Freiraum und den beiden Druckräumen zur Folge, so daß nunmehr im Freiraum ein Überdruck relativ zu beiden Druckräumen ansteht. Dieser Überdruck wirkt im Freiraum auf die Mantelfläche des Dichtelementes und bewirkt ein Kippen des Dichtelementes um die dem Nutgrund benachbarte Dichtkante, wodurch die andere stirnseitige Dichtkante abhebt, so daß der Freiraum mit einem Druckraum kommuniziert und der Überdruck des Freiraums in diesen Druckraum abgebaut wird. Nach erfolgtem Druckausgleich stellt sich das Dichtelement in seine ursprüngliche Lage zurück.

Der selbsttätige Druckausgleich zum Abbau des Überdruckes im Freiraum verhindert eine zu hohe Reibkraft zwischen der umfangsseitigen Dichtkante und dem angrenzenden Bauteil. Dadurch ist sowohl ein erhöhter Verschleiß der umfangsseitigen Dichtzone als auch eine überhöhte Haftreibung und damit die Gefahr einer Beschädigung bzw. Fehlfunktion der Dichtung weitgehend vermieden.

Die erfindungsgemäße Dichtung ist auch einfach herzustellen, da sie frei von Hinterschneidungen ist, die eine zeitaufwendige Entformung verursachen würden.

Vorteilhaft ist der radiale Abstand zwischen den stirnseitigen Dichtkanten größer als die radiale Erstreckung zwischen der umfangsseitigen Dichtzone und der ihr nächstliegenden, stirnseitigen Dichtkante. Hierdurch sind ideale Hebelverhältnisse für den Fall gegeben, daß in demjenigen Druckraum ein Überdruck ansteht, der der unteren, nahe am Nutgrund liegenden stirnseitigen Dichtkante benachbart ist. Das Dichtelement kippt infolge des Überdruckes zuverlässig um die gegenüberliegende stirnseitige Dichtkante, wobei über die Hebelverhältnisse das auslösende Kippmoment leicht eingestellt werden kann.

In zweckmäßiger Weiterbildung ist der radiale Abstand zwischen den stirnseitigen Dichtkanten größer ausgebildet als die radiale Erstreckung zwischen der dem Nutgrund benachbarten Dichtkante und der dem Nutgrund zugewandten Umfangsseite des Dichtelements. Die dem Nutgrund benachbarte Dichtkante ist auf der seitlichen Mantelfläche des Dichtelements angeordnet. Zwischen der innenliegenden, dem Nutgrund nächstliegenden Umfangsseite des Dichtelements und der stirnseitigen Dichtkante kann sich radial ein Bereich auf der Mantelfläche des Dichtelementes erstrecken, der keinen wesentlichen Beitrag zur elastischen Verformung und zum Kippen des Dichtelementes und dadurch bedingtem Druckausgleich zwischen dem mit Überdruck beaufschlagten Freiraum und dem Druckraum leistet. Indem diese radiale Erstreckung geringer ausgebildet ist als der radiale Abstand zwischen den stirnseitigen Dichtkanten, ist gewährleistet, daß der Überdruck im Freiraum eine Verformung des Dichtelements bewirkt und der Überdruck abgebaut werden kann.

Die stirnseitigen Dichtkanten können als Dichtwulst ausgebildet sein, der sich in Umfangsrichtung der Nut entlang des Dichtkörpers erstreckt und eine Berührlinie zwischen Dichtelement und Nutflanke bildet. Es kann auch zweckmäßig sein, eine der seitlichen Dichtkanten an einer einteilig mit dem Dichtkörper ausgebildeten Dichtlippe auszubilden, die sich etwa in Richtung des Nutgrundes erstreckt und mit Vorspannung an der benachbarten Nutflanke anliegt. In jedem Fall ist sichergestellt, daß die Dichtkanten in unterschiedlichem radialen Abstand an den jeweiligen Nutflanken anliegen, so daß infolge der Hebelverhältnisse ein anstehender Überdruck eine Verformung des Dichtelementes bewirkt.

In Weiterbildung der Erfindung ist vorgesehen, daß der Dichtkörper des Dichtelements aus zwei radial beabstandeten Abschnitten mit vorteilhaft etwa gleicher Querschnittsfläche aufgebaut ist, die über einen Verbindungsabschnitt mit verjüngtem Querschnitt miteinander verbunden sind. Zweckmäßig sind die stirnseitigen Dichtkanten an dem dem Nutgrund benachbarten Abschnitt angeordnet, so daß durch die Taillierung über den Verbindungsabschnitt mit verjüngtem Querschnitt der obere Abschnitt Träger der umfangsseitigen Dichtkante ist, die an der Mantelfläche des angrenzenden Bauteiles anliegt und der untere Abschnitt Träger der stirnseitigen Dichtkanten ist. Diese Ausbildung des Dichtelements ist flexibel einsetzbar und weist eine hohe Eigenelastizität auf.

Weitere Merkmale und vorteilhafte Ausgestaltungen der Erfindung sind den weiteren Ansprüchen, der Beschreibung und den Zeichnungen zu entnehmen, in denen Ausführungsbeispiele der Erfindung dargestellt sind. Es zeigen:
- Fig. 1: einen Schnitt durch eine Nut mit eingesetztem Dichtelement in einem Kolben, der in einem Zylinder geführt ist,
- Fig. 2: einen Schnitt durch eine Nut mit eingesetztem Dichtelement in einem Zylinder in einer anderen Ausführung,
- Fig. 3: einen Schnitt durch eine Nut mit Dichtelement in einer weiteren Ausführung,
- Fig. 4: einen Schnitt durch eine Nut mit Dichtelement in noch einer Ausführung.

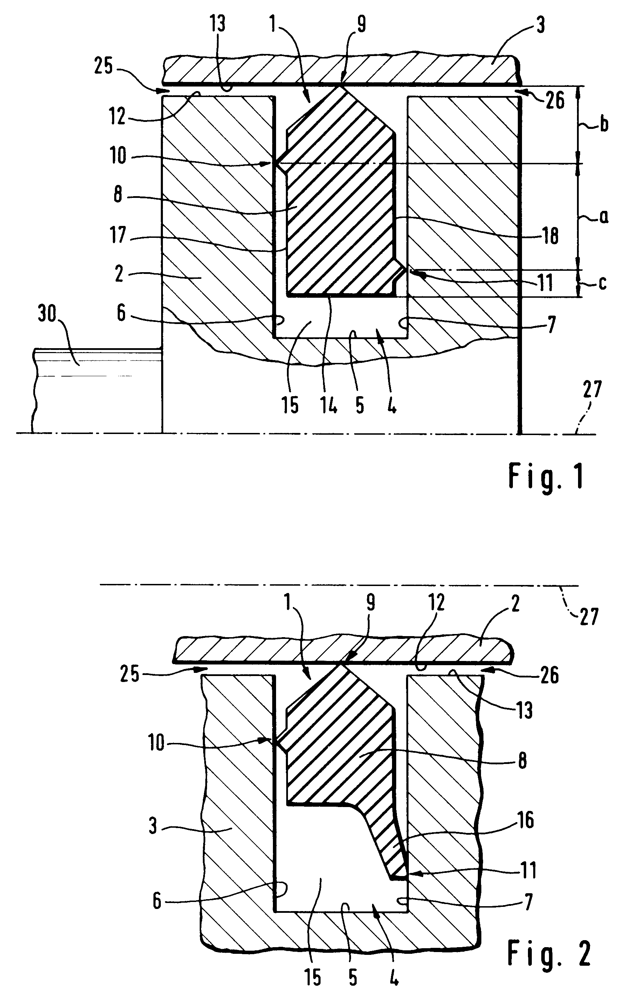

Das in Fig. 1 gezeigte Dichtelement 1 ist als Dichtring ausgebildet, der in eine radial nach außen offene Umfangsnut 4 in einem Bauteil 2 eingesetzt ist. Das bezüglich einer Längsachse 27 rotationssymmetrische Bauteil 2 ist als Kolben an einer Kolbenstange 30 ausgeführt, der axial beweglich in einem als Zylinder ausgebildeten Bauteil 3 geführt ist. Das Dichtelement 1 weist eine umfangsseitige, radial außenliegende und dem Nutgrund 5 abgewandte Dichtzone 9 auf, die an der Mantelfläche 13 des Zylinders 3 anliegt. Das Dichtelement 1 ist mit Vorspannung radial nach außen derart kraftbeaufschlagt, daß die Dichtzone 9 an die Mantelfläche 13 des Zylinders 3 gepreßt wird. Der Zylinder 3 weist ein Übermaß gegenüber der Kolbenstange 2 auf, so daß zwischen der Mantelfläche 12 der Kolbenstange 2 und der Mantelfläche 13 des Zylinders 3 zwei durch das Dichtelement getrennte, axial benachbarte ringförmige Druckräume 25, 26 gebildet sind. Der Kolben 2 stellt innerhalb des Zylinders 3 die Trennstelle zwischen den axial benachbarten Druckräumen 25, 26 dar. Das Dichtelement verhindert einen Druckausgleich zwischen den Druckräumen 25, 26 über den Spalt zwischen der Mantelfläche 13 des Zylinders 3 und dem Kolben 2.

Zwischen der radial innenliegenden Umfangsseite 14 des Dichtelements und dem Nutgrund 5 ist ein Freiraum 15 gebildet, wobei das Dichtelement nicht in Berührung mit dem Nutgrund 5 kommt. An den Nutflanken 6, 7 liegen jeweils eine stirnseitige Dichtkante 10, 11 an, die einteilig mit dem Dichtkörper 8 des Dichtelements ausgebildet sind und sich entlang der Seitenflächen 17, 18 des Dichtelements erstrecken. Durch die umfangsseitige Dichtzone 9 und die zwei stirnseitigen Dichtkanten 10, 11 ist eine druckdichte Abdichtung zwischen den beiden Druckräumen 25, 26 gewährleistet.

Um ein Dichtelement zu schaffen, das bei allen anliegenden Druckdifferenzen eine gute Abdichtung der axial benachbarten Druckräume gewährleistet und bei dem eine zu hohe Losbrechkraft nach längeren Betriebspausen vermieden ist, ist vorgesehen, daß die stirnseitigen Dichtkanten 10, 11 mit radialem Abstand a zueinander angeordnet sind. Dadurch wirkt auf das Dichtelement 1 bei einem Überdruck in einem der Druckräume 25, 26 eine Kraft, die etwa parallel zur Längsachse 27 gerichtet ist. Diese Axialkraft bewirkt aufgrund der radial in unterschiedlicher Höhe angeordneten stirnseitigen Dichtkanten 10, 11 nach Art einer Drehung eine elastische Verformung des Dichtelementes, so daß der Freiraum 15 mit dem jeweiligen, mit Überdruck beaufschlagten Druckraum 25 oder 26 kommunizieren kann. Infolge des Druckausgleiches nimmt der Druck im Freiraum 15 den gleichen Wert an wie der Überdruck in einem der Druckräume 25, 26. Ist das Dichtelement infolge eines Überdrucks im Druckraum 26 um die stirnseitige Dichtkante 10 gekippt, nimmt nach erfolgtem Druckausgleich das Dichtelement, das zweckmäßig aus Gummi oder einem gummiähnlichen Material mit einer Härte von beispielsweise 70 Shore gefertigt sein kann, wieder seine ursprüngliche Dichtstellung ein, so daß der Überdruck im Freiraum 15 durch die Dichtkanten 10, 11 gegenüber dem Druckräumen 25, 26 abgeschlossen ist. Der Überdruck im Freiraum 15 bewirkt, daß das Dichtelement mit einer zusätzlichen Kraft radial nach außen an die Mantelfläche 13 des Zylinders 3 gepreßt wird, so daß die Dichtwirkung zwischen umfangsseitiger Dichtzone 9 und der Mantelfläche 13 erhöht ist und der Überdruck in dem jeweiligen Druckraum nicht auf den benachbarten Druckraum übertragen werden kann.

Ein Überdruck im Druckraum 25 hat zur Folge, daß die Seitenfläche 18 des Dichtelements, die dem Druckraum 25 abgewandt ist, sich an die Nutflanke 7 durch elastische Verformung des Dichtelements und ein geringfügiges Kippen um die untere, stirnseitige Dichtkante 11 annähert. Der Freiraum 15 kommuniziert mit dem Druckraum 25; in beiden Räumen herrschen gleiche Druckverhältnisse. Das Dichtelement kann seine verformte Lage so lange beibehalten, bis in beiden angrenzenden Druckräumen 25, 26 der gleiche Druck ansteht.

Bei einem Nachlassen des Überdruckes im Druckraum 25 wird der Überdruck im Freiraum 15 mit abgebaut. Dadurch wird verhindert, daß die umfangsseitige Dichtzone 9 mit einer überhöhten Anpreßkraft an der Mantelfläche 13 des Zylinders 3 anliegt. Ist der Druck im Druckraum 25 und im Freiraum 15 auf die Höhe des Drucks im Druckraum 26 abgebaut, nimmt das Dichtelement aufgrund seiner Eigenelastizität wieder seine ursprüngliche Dichtlage ein.

In dem Fall, daß im Druckraum 26 Überdruck herrscht, verformt sich bzw. kippt das Dichtelement dahingehend, daß die Seitenfläche 17 der Nutflanke 6 angenähert wird und das Dichtelement geringfügig um die seitliche Dichtkante 10 kippt. Daraufhin kommuniziert der Freiraum 15 mit dem Druckraum 26, so daß ein Druckausgleich stattfindet und das Dichtelement wieder seine ursprüngliche Lage einnehmen kann. Im Falle eines Druckabbaus im Druckraum 26 wirkt ein Überdruck im Freiraum 15 gegenüber beiden Druckräumen 25, 26, wodurch eine elastische Verformung bzw. ein Kippen des Dichtelements um die untere, stirnseitige Dichtkante 11 erzielt ist und der Überdruck in den Druckraum 25 entweichen kann.

In Weiterbildung der Erfindung ist vorgesehen, daß der radiale Abstand a zwischen den beiden stirnseitigen Dichtkanten 10, 11 größer ist als die radiale Erstreckung b zwischen der umfangsseitigen Dichtzone 9 und der ihr nächstliegenden, stirnseitigen Dichtkante 10, siehe Fig. 1. Durch die Wahl dieses Hebelverhältnisses ist sichergestellt, daß bei einem Überdruck im Druckraum 26 ein Kippen des Dichtelements 1 um die Dichtkante 10 ermöglicht ist, da die auf die Seitenfläche 18, welche dem Druckraum 26 benachbart ist, wirkende Flächenkraft in dem radialen Abschnitt zwischen den stirnseitigen Dichtkanten 10 und 11 größer ist als die Flächenkraft in dem radialen Abschnitt zwischen stirnseitiger Dichtkante 10 und oberer Dichtzone 9.

Eine weitere günstige Beeinflussung der Hebelverhältnisse ist dadurch erzielt, daß der radiale Abstand a größer ist als die radiale Erstreckung c zwischen der dem Nutgrund 5 benachbarten Dichtkante 11 und der radial innenliegenden, dem Nutgrund nächstliegenden Umfangsseite 14 des Dichtelements. Durch dieses Verhältnis ist ein sicherer Abbau des Überdruckes im Freiraum 15 für den Fall gewährleistet, daß in beiden Druckräumen 25, 26 relativ zum Freiraum 15 ein Unterdruck herrscht. Der Überdruck im Freiraum 15 beaufschlagt die Seitenfläche 17 des Dichtelementes, wobei bei dem gewählten Verhältnis derjenige radiale Anteil der Seitenfläche 17, der zu einem Kippen um die Dichtkante 11 beiträgt, größer ist als derjenige radiale Anteil, der zu einer Beibehaltung der Lage beiträgt.

Zweckmäßig ist zumindest eine der stirnseitigen Dichtkanten 10, 11 als Dichtwulst ausgebildet, der sich in Umfangsrichtung der Nut 4 entlang des Dichtkörpers 8 erstreckt. Die Dichtwulst, die bevorzugt einteilig mit dem Dichtkörper ausgebildet ist, kann hierbei im Querschnitt Dreiecksform aufweisen oder auch gemäß einer nicht gezeigten Ausführung beispielsweise halbkreisförmig ausgebildet sein. Die Dichtkanten 10, 11 können auch als Mehrfachkante, Mehrfachwulst oder als Dichtfläche ausgeführt sein; in gleicher Weise kann auch die umfangsseitige Dichtzone 9 ausgebildet sein.

Gemäß Fig. 2 kann eine der stirnseitigen Dichtkanten auch an einer Dichtlippe ausgebildet sein, die zweckmäßig einteilig am Dichtkörper 8 angeformt ist und die sich etwa in Richtung des Nutgrundes 5 erstreckt und mit Vorspannung an der benachbarten Nutflanke anliegt. Gemäß Fig. 2 ist die dem Nutgrund 5 benachbarte, stirnseitige Dichtkante 11 an einer Dichtlippe 16 angeordnet, wobei ein Überdruck im Druckraum 26 die axial leicht nach außen gestellte Dichtlippe 16 nach innen drückt, so daß ein Druckausgleich zwischen dem Druckraum 26 und dem Freiraum 25 stattfinden kann. Nach erfolgtem Druckausgleich stellt sich die Dichtlippe 16 aufgrund ihrer Eigenspannung wieder zurück, so daß die Dichtkante 11 wieder zur Anlage an die Nutflanke 7 kommt.

Fig. 2 ist auch zu entnehmen, daß die Nut 4 in der Wand des Zylinders 3 angeordnet ist, so daß die umfangsseitige Dichtzone 9 des Dichtelements nun radial nach innen in Richtung der Längsachse 27 zeigt und an der Mantelfläche 12 der Kolbenstange 2 zur Anlage kommt. Die an der Dichtlippe 16 ausgebildete, dem Nutgrund 4 benachbarte Dichtkante 11 liegt in dieser Ausbildung auf der radial außenliegenden Seite des Dichtelementes 1. Die Dichtkante 11 liegt entlang einer umlaufenden Berührlinie an der Nutflanke 7 an.

In den Ausführungsbeispielen nach den Fig. 1 und 2 ist der Dichtkörper 8 des Dichtelements im Querschnitt etwa als Rechteck ausgebildet, wobei die Seitenflächen 17, 18 des Dichtelements die etwa parallel zu den Nutflanken 6, 7 angeordneten Längsseiten des Rechtecks sind.

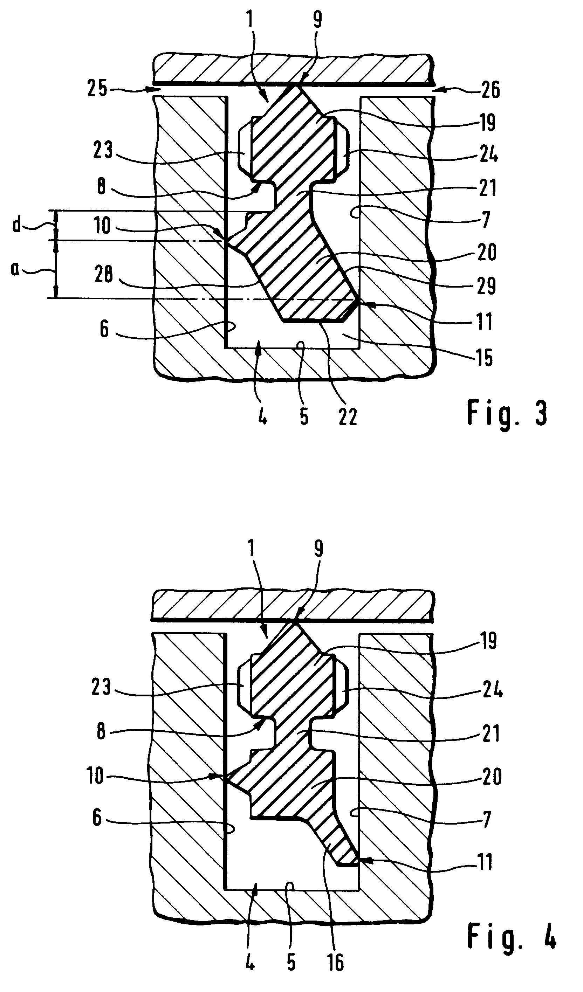

Die Fig. 3 und 4 zeigen weitere Ausführungsbeispiele der Erfindung. Der Dichtkörper 8 ist in zwei radial beabstandeten Abschnitte 19, 20 aufgeteilt, die beide etwa die gleiche Querschnittsfläche aufweisen und über einen Verbindungsabschnitt 21 mit verjüngtem Querschnitt miteinander verbunden sind. Die umfangsseitige, im Querschnitt etwa dreiecksförmige Dichtzone 9 ist an dem ersten Abschnitt 19 des Dichtkörpers 8 angeordnet; die stirnseitigen Dichtkanten 10, 11 verlaufen an dem zweiten, dem Nutgrund 5 benachbarten Abschnitt 20. Infolge der Aufteilung des Dichtkörpers in zwei radial benachbarte Abschnitte ist die Bewegung des dem Nutgrund 5 benachbarten zweiten Abschnittes 20 während des Druckausgleiches zwischen dem Freiraum 15 und den Druckräumen 25, 26 weitestgehend entkoppelt von dem ersten Abschnitt 19. Eine elastische Verformung bzw. ein Kippen des zweiten Abschnittes 20 wird über den im Querschnitt verjüngten Verbindungsabschnitt 21 nur geringfügig auf den ersten Abschnitt 19 übertragen, so daß die umfangsseitige Dichtzone 9 unbeeinflußt von der Bewegung des zweiten Abschnittes 20 ideal an der Mantelfläche des benachbarten Bauteiles anliegt. Die Kippachse des zweiten Abschnittes 20, um die während des Druckausgleiches gekippt wird, verläuft etwa im Bereich des Verbindungsabschnittes 21. Vorteilhaft ist der radiale Abstand a der stirnseitigen Dichtkanten 10, 11 am zweiten Abschnitt 20 größer als die radiale Erstreckung d zwischen dem Verbindungsabschnitt 21 und der ihm nächstliegenden, stirnseitigen Dichtkante 10. Diese Wahl der Hebelverhältnisse unterstützt einen sicheren Druckausgleich im Falle eines relativen Unterdruckes bzw. Überdruckes im Freiraum 15 gegenüber den Druckräumen 25, 26.

Bei dem Ausführungsbeispiel gemäß Fig. 3 ist der dem Nutgrund 5 benachbarte Abschnitt 20 im Querschnitt etwa als Parallelogramm ausgebildet, wobei eine Schmalseite 22 des Parallelogramms vorteilhaft etwa parallel zum Nutgrund 5 angeordnet ist. Die Längsseiten 28, 29 des Parallelogramms verlaufen winklig zu den Nutflanken 6, 7; infolge der winkligen Anordnung kann ein Überdruck im Druckraum 26 auf die gesamte Längsseite 29 auf der dem Freiraum 15 abgewandten Seite des Parallelogramms wirken, woraufhin der Abschnitt 20 um die Dichtkante 10 kippt und ein Druckausgleich zwischen Druckraum 26 und Freiraum 15 ermöglicht ist. Umgekehrt erfolgt ein Ableiten des Überdruckes aus dem Freiraum 15, indem die dem Freiraum 15 benachbarte Längsseite 28 des Parallelogramms von dem Überdruck in Richtung Nutflanke 7 gepreßt wird, so daß die Dichtkante 10 von der Nutflanke 6 abhebt und der Überdruck in den Druckraum 25 abgeleitet werden kann. Durch die hohe Nachgiebigkeit im Verbindungsabschnitt 21 ist gewährleistet, daß die elastische Verformung und Kippbewegung des zweiten Abschnittes 20 weitestgehend ohne Einfluß auf den ersten Abschnitt 19 bleibt.

Aus Gründen der erhöhten Sicherheit gegenüber einer unerwünschten elastischen Verformung in Axialrichtung können am ersten Abschnitt 19 an den den Nutflanken 6, 7 benachbarten Seiten verteilt angeordnete Stützkörper 23, 24 vorgesehen sein. Die Stützkörper 23, 24 können punktförmig oder als radial bzw. in Umfangsrichtung verlaufende Stützleisten ausgebildet sein und sind zweckmäßig regelmäßig verteilt angeordnet. Sie können, wie in Fig. 3 und 4 gezeigt, einen geringfügigen axialen Abstand zu den jeweils benachbarten Nutflanken 6, 7 aufweisen; gemäß einer nicht gezeigten Ausführung kommen die Stützleisten zur Anlage an die Nutflanken 6, 7, wobei ein Druckausgleich zwischen den Druckräumen 25, 26 und dem Freiraum 15 durch die Zwischenräume zwischen benachbarten Stützleisten jederzeit möglich ist. Durch die Stützkörper 23, 24 ist insbesondere während einer Relativbewegung von Kolbenstange und Zylinder gewährleistet, daß ein axial auf den ersten Abschnitt 19 wirkender Staudruck keine unerwünschte elastische Verformung der oberen Dichtzone 9 bewirkt.

Bei dem in Fig. 4 gezeigten Ausführungsbeispiel ist der Dichtkörper 8 in zwei etwa im Querschnitt rechteckförmige Abschnitte 19, 20 aufgeteilt, die über den im Querschnitt verjüngten Verbindungsabschnitt 21 verbunden sind. An dem dem Nutgrund 5 benachbarten zweiten Abschnitt 20 ist eine Dichtlippe 16 ausgebildet, die mit axialer Vorspannung die Dichtkante 11 gegen die Nutflanke 7 drückt. Die gegenüberliegende stirnseitige Dichtkante 10 ist an der der Nutflanke 6 benachbarten Seitenfläche des zweiten Abschnittes 20 angeordnet. Durch eine entsprechende Dimensionierung der Dichtlippe 16 kann das Dichtelement 1 dem jeweiligen Einbauraum in der Nut 4 angepaßt werden; zudem ist die Anpassung an einen Soll-Überdruck möglich, ab dem ein Druckausgleich zwischen dem Freiraum 15 und den Druckräumen 25, 26 stattfinden soll. Vorteilhaft ist außerdem, daß die Dichtlippe 11 nicht von überstehenden Rändern der Fertigungsform zwangsentformt werden muß.

## Patentansprüche

1. Dichtung zwischen zwei axial zueinander beweglichen Bauteilen, insbesondere zwischen einer Kolbenstange bzw. einem Kolben und einem aufnehmenden Zylinder, mit einem ringförmigen, zwei axial benachbarte Druckräume (25, 26) trennenden Dichtelement (1), das in eine Nut (4) in einem der Bauteile (2, 3) einsetzbar ist und eine umfangsseitige, mit Vorspannung radial kraftbeaufschlagte Dichtzone (9) am Dichtkörper (8) des Dichtelements (1) aufweist, die an der Mantelfläche (13, 12) des anderen Bauteils (3, 2) abdichtend anliegt, wobei zwischen dem Nutgrund (5) und dem Dichtelement (1) ein Freiraum (15) gebildet ist, der mit einem in den Druckräumen (25, 26) anstehenden Überdruck beaufschlagbar ist, sowie mit zwei stirnseitigen Dichtkanten (10, 11), die an den axial gegenüberliegenden Nutflanken (6, 7) anliegen,
dadurch gekennzeichnet, daß die stirnseitigen Dichtkanten (10, 11) mit radialem Abstand (a) zueinander angeordnet sind.

2. Dichtung nach Anspruch 1,
dadurch gekennzeichnet, daß der radiale Abstand (a) größer ist als die radiale Erstreckung (b) zwischen der oberen Dichtzone (9) und der ihr benachbarten stirnseitigen Dichtkante (10).

3. Dichtung nach Anspruch 1 oder 2,
dadurch gekennzeichnet, daß der radiale Abstand (a) größer ist als die radiale Erstreckung (c) zwischen der dem Nutgrund (5) benachbarten stirnseitigen Dichtkante (11) und der dem Nutgrund (5) zugewandten Umfangsseite (14) des Dichtelements (1).

4. Dichtung nach einem der Ansprüche 1 bis 3,
dadurch gekennzeichnet, daß zumindest eine der stirnseitigen Dichtkanten (10, 11) als umlaufender Dichtwulst ausgebildet ist.

5. Dichtung nach einem der Ansprüche 1 bis 4,
dadurch gekennzeichnet, daß die dem Nutgrund (5) benachbarte stirnseitige Dichtkante (11) an einer Dichtlippe (16) ausgebildet ist, die sich etwa in Richtung des Nutgrundes (5) erstreckt und mit Vorspannung an einer Nutflanke (7) anliegt.

6. Dichtung nach einem der Ansprüche 1 bis 5,
dadurch gekennzeichnet, daß der Dichtkörper (8) im Querschnitt etwa als Rechteck ausgebildet ist, wobei die Längsseiten (17, 18) des Rechtecks etwa parallel zu den Nutflanken (6, 7) liegen.

7. Dichtung nach einem der Ansprüche 1 bis 6,
dadurch gekennzeichnet, daß der Dichtkörper (8) zwei radial beabstandete Abschnitte (19, 20) aufweist, die über einen Verbindungsabschnitt (21) mit verjüngtem Querschnitt miteinander verbunden sind.

8. Dichtung nach Anspruch 7,
dadurch gekennzeichnet, daß die seitlichen Dichtkanten (10, 11) an dem dem Nutgrund (5) benachbarten Abschnitt (20) angeordnet sind, wobei vorzugsweise der radiale Abstand (a) der seitlichen Dichtkanten (10, 11) größer ist als die radiale Erstreckung (d) zwischen dem Verbindungsabschnitt (21) und der ihm benachbarten seitlichen Dichtkante (10).

9. Dichtung nach einem der Ansprüche 7 oder 8,
dadurch gekennzeichnet, daß der dem Nutgrund (5) benachbarte Abschnitt (20) im Querschnitt etwa als Parallelogramm ausgebildet ist und vorzugsweise eine Schmalseite (22) des Parallelogramms etwa parallel zum Nutgrund (5) angeordnet ist.

10. Dichtung nach einem der Ansprüche 1 bis 9,
dadurch gekennzeichnet, daß an den den Nutflanken (6, 7) gegenüberliegenden Stirnseiten des Dichtkörpers (8) in Umfangsrichtung verteilt angeordnete, radial verlaufende Stützkörper (23, 24) vorgesehen sind.
